# DEMANDE DE BREVET EUROPEEN

(11) **EP 2 397 223 A1**
(43) Date de publication de la demande: **21.12.2011**
(21) Numéro de dépôt: 11165609.6
(22) Date de dépôt: 11.05.2011
(51) Int. Cl.: B01J 35/04, B01J 19/30, B01J 19/24, B01J 8/04, B01D 39/20, C04B 38/06, C04B 38/00, C01B 3/40, C01B 3/16, C07C 1/04, C10G 2/00

(54) **Réacteur catalytique comprenant une structure catalytique offrant une distribution améliorée du flux gazeux**

(30) Priorité: 18.06.2010 FR 1054854
(71) Demandeur: L'AIR LIQUIDE, Société Anonyme pour l'Etude et l'Exploitation des Procédés Georges Claude, 75007 Paris (FR)
(72) Inventeur: Del-Gallo, Pascal, 91410, DOURDAN (FR); Gary, Daniel, 78180, MONTIGNY LE BRETONNEUX (FR); Lebain, Gilles, 94320, THIAIS (FR)
(74) Mandataire: Beroud, Amandine

(57) **Abrégé**

Réacteur catalytique mettant en jeu un flux gazeux comprenant une structure catalytique comprenant:
- au moins un premier module d'une architecture alvéolaire catalytique offrant au flux gazeux un chemin privilégié dans la direction sensiblement axiale du réacteur ; et
- au moins un second module d'une architecture alvéolaire catalytique offrant au flux gazeux un chemin privilégié dans la direction sensiblement radiale du réacteur ;

le premier et le deuxième module étant juxtaposés au sein du réacteur.

## Description

La présente invention a pour objet un réacteur catalytique avec un agencement particulier de structures alvéolaires catalytiques.

Les mousses en céramique voire en alliage métallique sont connues pour être utilisées comme substrat de catalyseur pour les réactions chimiques, en particulier les réactions de catalyse hétérogène. Ces mousses sont particulièrement intéressantes pour des réactions fortement exo- ou endo- thermiques (ex : réaction exothermique de Fischer-Tropsch, réaction du gaz à l'eau (réaction de water-gas-shift), réaction d'oxydation partielle, réaction de méthanation...), et/ou pour des réacteurs catalytiques où l'on cherche à obtenir des vitesses spatiales élevées (réaction de vaporeformage du gaz naturel, du naphta, ...).

La méthode de réalisation de mousses céramiqus à macro porosité ouverte la plus rependue consiste en l'imprégnation d'une mousse polymérique (le plus souvent polyuréthane ou polyester), découpée selon la géométrie souhaitée, par une suspension de particules céramiques dans un solvant aqueux ou organique. L'excès de suspension est évacué de la mousse de polymère par l'application répétée d'une compression ou par centrifugation, afin de ne conserver qu'une fine couche de suspension sur les brins du polymère. Après une ou plusieurs imprégnations de la mousse polymérique par ce procédé, celle-ci est séchée de façon à évacuer le solvant tout en conservant l'intégrité mécanique de la couche de poudre céramique déposée. La mousse est ensuite chauffée à haute température en deux étapes. La première étape appelée déliantage consiste à dégrader le polymère et autres organiques éventuellement présents dans la suspension, par une élévation de température lente et contrôlée jusqu'à élimination complète des substances volatiles organiques (typiquement 500-900°C). La seconde étape appelée frittage consiste à consolider la structure minérale résiduelle par un traitement thermique haute température. Cette méthode de fabrication permet ainsi d'obtenir une mousse inorganique qui est la réplique de la mousse de polymère initiale, au retrait de frittage près. La porosité finale permise par cette méthode couvre une gamme de 30% à 95% pour une taille de pore allant de 0,2mm à 5mm. La taille de pore(s) finale (ou macroporosité ouverte) est issue de la macrostructure du « template » organique initial (mousse de polymère, polyuréthane généralement). Celle-ci varie généralement de 60 à 5 ppi (ppi : pore per inch, de 50 µm à 5 mm).

La mousse peut également être de nature métallique avec une formulation chimique permettant d'assurer une stabilité chimique de l'architecture sous conditions opératoires (température, pression, composition gazeuse, ...). Dans le cadre d'une application pour la réaction de vaporeformage de gaz naturel l'architecture alvéolaire métallique sera constituée de formulations chimiques à base NiFeCrAl oxydée en surface, cette oxydation de surface ou couche de passivation permettant la formation d'une couche d'alumine micrométrique protégeant l'alliage métallique de tout phénomène de corrosion. La couche de passivation est obtenue soit à partir d'éléments chimiques (Al, Cr, ...) contenus dans la formulation de départ, soit après ajouts sur les mousses métalliques par Chemical Vapor Deposition, par pack-cémentation, ...

Les architectures alvéolaires céramiques et/ou métalliques recouverts de céramique constituent de bons supports de catalyseurs à plusieurs égards :
- un rapport surface/volume maximal (m²/m³), afin d'augmenter la surface géométrique d'échange et donc indirectement l'efficacité catalytique,
- une minimisation des pertes de charge le long du lit (entre l'entrée et la sortie du réacteur catalytique),
- un transfert de chaleur d'une efficacité axiale et/ou radiale accrue. On entend par axial le long de l'axe du réacteur catalytique, et par radial de la paroi interne ou externe du réacteur catalytique au centre du lit catalytique,
- une amélioration des contraintes thermomécaniques et/ou thermochimiques supportées par le lit,
- une amélioration de la densité du remplissage d'un tube par rapport à un remplissage aléatoire induit par les structures conventionnelles (sphère, pellet, cylindre, barillets...),
- un contrôle du remplissage permettant d'améliorer l'homogénéité du remplissage d'un tube à l'autre.
Le choix de la structure adaptée à une réaction donnée résulte souvent d'un compromis entre l'optimisation de ces différents facteurs et les architecture(s) / microstructure(s) de(s) catalyseur(s) associées.

D'autre part, dans le cas d'un réacteur constitué de plusieurs tubes en parallèle, une autre problématique est celle de l'homogénéité du remplissage des tubes. En effet, un fonctionnement optimisé du procédé requiert des comportements analogues des différents tubes, en particulier en matière de perte de charge et de minimisation des points chauds. Ceci passe par un contrôle efficace du remplissage des tubes.

La structuration globale d'un réacteur catalytique à lit fixe est un « phénomène » multi-échelles :
- La microstructure du catalyseur (catalyseur = microstructure = phase(s) active(s) + support ou phase(s) active(s) - support l'ensemble déposé sur un substrat) lui-même, à savoir sa formulation chimique, la micro et/ou méso-porosité du support, la taille, la dispersion et la surface métallique de(s) phase(s) active(s), l'épaisseur du(des) dépôt(s), la distribution granulométrique des grains de support, ...
- L'architecture du matériau catalytique (matériau catalytique = catalyseur + substrat céramique ou métallique recouvert d'une couche d'oxyde = microstructure + architecture), c'est-à-dire la forme géométrique du substrat (granulés, barillets, monolithes en nids d'abeille, structures alvéolaires de type mousse, sphères, pilules, bâtonnets, ...), la porosité du substrat, la taille des grains du substrat, l'épaisseur des parois (monolithes, mousses, ...), ...
- La structure du lit au sein du réacteur (structure = empilement des matériaux catalytiques = empilements d'architectures et de microstructures), c'est-à-dire l'agencement des matériaux catalytiques d'architecture/microstructure contrôlée(s) au sein du réacteur catalytique. Il peut être envisagé par exemple comme structure de lit(s) catalytique(s) des empilements successifs additionné ou non d'éléments non catalytiques de fonctionnalités variées.

Un des inconvénients des structures monolithiques de réacteurs catalytiques réside dans la différence de dilatation entre ces structures et les tubes (enceinte réactionnelle) qui les contiennent; ce qui est susceptible d'entrainer un contact insuffisant entre certaines architectures (monolithes, ...) et la paroi interne du tube. Cette non-continuité physique entraine :
- des écoulements préférentiels du gaz le long des parois (by-pass)
- une absence de transfert de chaleur par conduction entre le tube et la zone du lit catalytique concernée

Par structure de réacteurs catalytiques, on entend des empilements successifs d'architectures diverses et variées (mousses, barillets, sphères, monolithes, ...) de nature céramiques et/ou métalliques recouverts de céramiques et de microstructures contrôlées.

Par structure monolithique de réacteurs catalytiques, on entend des empilements successifs d'architectures alvéolaires (mousses) céramiques et/ou métalliques recouverts de céramiques et de microstructures contrôlées. Il peut également être envisagé des architectures monolithes type nids d'abeille.

Une solution de la présente invention est un réacteur catalytique mettant en jeu un flux gazeux comprenant une structure catalytique comprenant:
- au moins un premier module d'une architecture alvéolaire catalytique offrant au flux gazeux un chemin privilégié dans la direction sensiblement axiale du réacteur ; et
- au moins un second module d'une architecture alvéolaire catalytique offrant au flux gazeux un chemin privilégié dans la direction sensiblement radiale du réacteur ;
le premier et le deuxième module étant juxtaposés au sein du réacteur.

Par « direction sensiblement axiale ou radiale » on entend une direction « à peu près » axiale ou radiale ; autrement dit, entre la direction « sensiblement axiale » et la direction « sensiblement radiale », on observe un angle compris entre 50 et 130°C, de préférence entre 70°C et 110°C.

Selon le cas, le réacteur selon l'invention peut présenter une ou plusieurs des caractéristiques suivantes :
- le premier module est orienté de telle manière que la majorité des pores de l'architecture alvéolaire catalytique débouche dans la direction sensiblement axiale du réacteur ; et le second module est orienté de telle manière que la majorité des pores de l'architecture alvéolaire catalytique débouche dans la direction sensiblement radiale du réacteur ; on parlera dans ce cas de porosité majoritairement orientée ;
- le premier module présente une pluralité de canaux au sein de l'architecture alvéolaire catalytique orientés dans la direction sensiblement axiale du réacteur ; et le second module présente une pluralité de canaux au sein de l'architecture alvéolaire catalytique orientés dans la direction sensiblement radiale du réacteur ; par « pluralité de canaux», on entend une quantité de canaux comprise entre 3 et 10 par module, de préférence entre 5 et 8. Le diamètre hydraulique des canaux est compris entre 1 et 5 mm de préférence entre 2 et 4 mm.
- les canaux du premier module sont interconnectés avec les canaux du second module. Cette interconnexion permet de minimiser la perte de charge et d'uniformiser l'écoulement entre les différents modules.
- le premier module et le second module sont confondus en un seul module offrant au flux gazeux un premier chemin privilégié dans la direction sensiblement axiale du réacteur et un deuxième chemin privilégié dans la direction sensiblement radiale du réacteur ; dans ce cas le flux prendra préférentiellement les 2 chemins au prorata de la résistance de passage induite par l'architecture des modules caractérisée par leur perte de charge intrinsèque.
- le premier module est orienté de telle manière que la majorité des pores de l'architecture alvéolaire catalytique débouche dans la direction sensiblement axiale du réacteur ; et le second module présente une pluralité de canaux au sein de l'architecture alvéolaire catalytique orientés dans la direction sensiblement radiale du réacteur ;
- le premier module présente une pluralité de canaux au sein de l'architecture alvéolaire catalytique orientés dans la direction sensiblement axiale du réacteur ; et le second module est orienté de telle manière que la majorité des pores de l'architecture alvéolaire catalytique débouche dans la direction sensiblement radiale du réacteur ;
- les canaux sont de section circulaire, carré, triangulaire, hexagonale, ou octogonale, ou ont la forme de fentes ou de rainures ; quelque soit la forme des canaux, leur diamètre hydraulique sera compris entre 1 et 5 mm de préférence entre 2 et 4 mm.
- les architectures alvéolaires catalytiques sont soit des mousses céramiques, soit des mousses métalliques recouvertes en surface d'une couche céramique protectrice. Dans les cas une microstructure catalytique est déposée en surface de l'architecture.

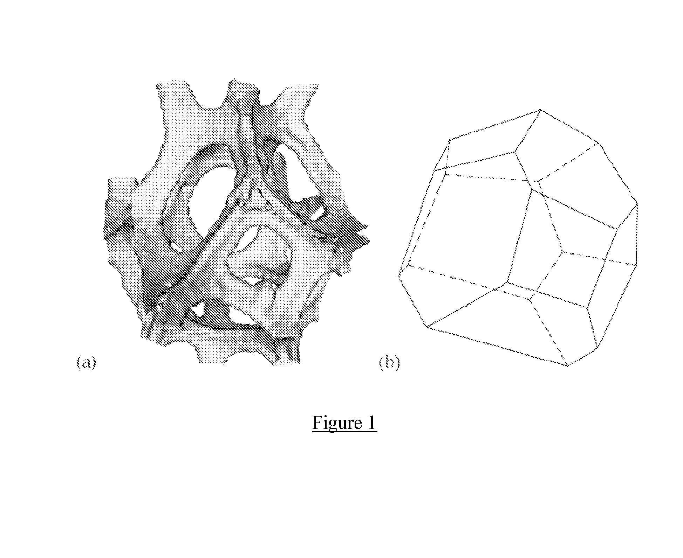

Cet agencement des architectures alvéolaires catalytiques au sein du réacteur catalytique permet de remélanger en permanence les flux gazeux à l'entrée de chaque module. Ce remélange se fait essentiellement par un changement d'orientation du flux gazeux :
- via son contact avec les brins constituant les cellules élémentaires a) (figure 1) de l'architecture alvéolaire, via l'orientation de la porosité débouchant constituée par la cage élémentaire b) (figure 1) de la structure alvéolaire et via la différence de densité du flux gazeux qui évolue selon les axes X,Y ; et/ou
- via le changement d'orientation des canaux au sein de l'architecture alvéolaire.

Ce remélange créant localement de la turbulence permet :
- de casser l'écoulement préférentiel du gaz le long des parois internes du réacteur ;
- d'accroitre le transfert thermique convectif radial via la turbulence générée à l'entrée de chaque module ; et
- d'assurer une activité catalytique optimale découlant des 2 premiers points.

Un module ayant une porosité débouchante majoritairement orientée sera réalisé à partir du choix de la matrice en matériau polymérique. La structure de cette matrice sera le précurseur du module à porosité débouchante majoritairement orientée. Cette structure est par exemple décrite par les documents WO9910295 et WO 9910634. La matrice subit ensuite les traitements classiques utilisés pour l'élaboration des structures catalytiques alvéolaires décrits précédemment. L'observation en coupe d'une structure alvéolaire permettra de reconnaître l'organisation de la porosité débouchante (orientation, taille de la cage...épaisseur des brins). Suite à cette observation le module sera disposé dans le réacteur catalytique de manière à donner au chemin préférentiel l'inclinaison souhaitée, autrement dit une direction sensiblement axiale ou sensiblement radiale.

Pour obtenir des modules présentant une pluralité de canaux au sein de l'architecture alvéolaire catalytique deux approches sont possibles. Soit on prend une architecture alvéolaire catalytique « brute » métallique ou céramique (sans canaux) dans lequel on réalise des perçages, découpes à l'aide d'un outil garantissant de préférence la répétabilité. Cet outil peut être par exemple un laser, un outil de coupe spécifique, ... Soit on prend une architecture alvéolaire catalytique avec canaux. Cet objet est obtenu à partir de la matrice polymérique dans laquelle on réalise la découpe initiale à l'aide d'un outil garantissant de préférence la répétabilité (laser, jet d'eau, coupe mécanique par estampage, ...).

Les modules ont sensiblement les mêmes formes et les mêmes dimensions que le volume interne de l'enceinte réactionnelle du réacteur catalytique et quel que soit le type de structure alvéolaire (à porosité débouchante majoritairement orientée ou pas). Ces modules sont donc en général des cylindres.

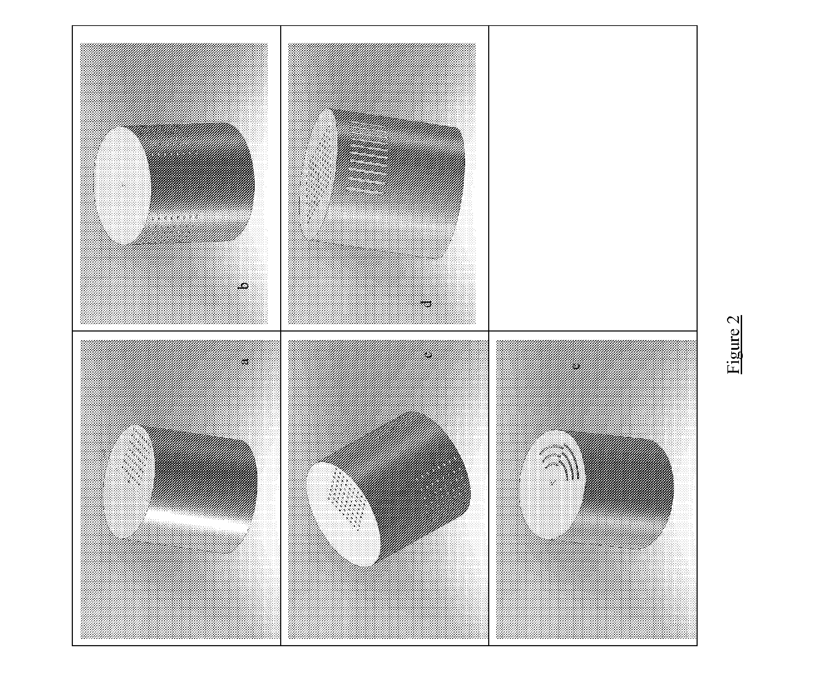

La figure 2 représente 4 modules présentant une pluralité de canaux. En supposant un agencement coaxial entre les modules et le réacteur :
- dans le module "a", les canaux à section circulaire sont orientés dans la direction axiale du réacteur ;
- dans le module "b", les canaux à section circulaire sont orientés dans la direction radiale du réacteur ;
- dans le module "c", une première partie des canaux à section circulaire est orientée dans la direction axiale du réacteur et une seconde partie des canaux à section circulaire est orientée dans la direction radiale du réacteur ;
- dans le module "d", les canaux à section circulaire sont orientées dans la direction axiale du réacteur et les canaux en forme de fentes sont orientés dans la direction radiale du réacteur ;
- dans le module "e", les canaux en forme de rainures cintrées sont orientés dans la direction axiale du réacteur.

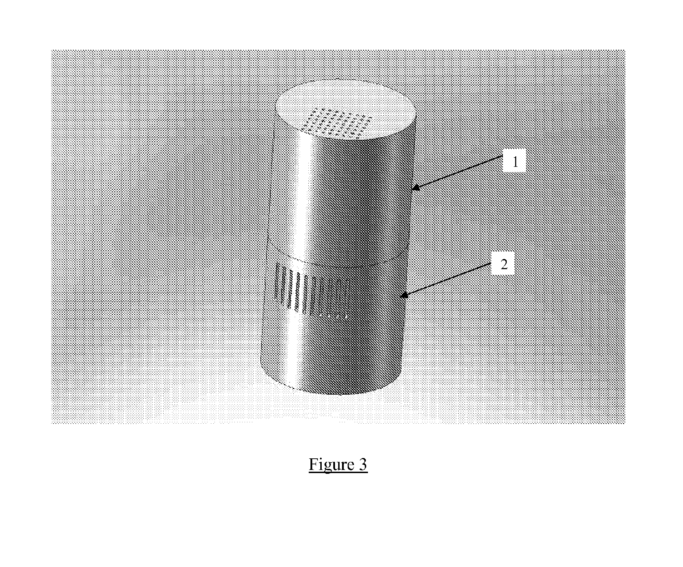

La figure 3 représente 2 modules juxtaposés, le premier module (1) comprenant des canaux à section circulaire orientés dans la direction axiale du réacteur et le second module (2) comprenant des canaux en forme de fentes orientés dans la direction radiale du réacteur.

Les architectures alvéolaires catalytiques sont fabriquées à partir d'une matrice en matériau polymérique choisi parmi le poly(uréthane) (PU), le poly(chlorure de vinyle) (PVC), le polystyrène (PS), la cellulose et le latex, mais le choix idéal de la mousse est limité par de sévères exigences.

Le matériau polymérique ne doit pas libérer des composés toxiques, par exemple le PVC est évité car il peut entrainer la libération de chlorure d'hydrogène.

L'architecture alvéolaire catalytique lorsqu'elle est de nature céramique comprend typiquement des particules inorganiques choisies parmi l'alumine(Al₂O₃) et/ou l'alumine dopée (La (1 à 20 % en poids)-Al₂O₃, Ce (1 à 20 wt.% en poids)-Al₂O₃, Zr (1 à 20 % en poids)-Al₂O₃), la magnésie (MgO), le spinelle (MgAl₂O₄), les hydrotalcites, CaO, les silicocalcaires, les silicoalumineux, l'oxyde de zinc, la cordiérite, la mullite, le titanate d'aluminium, et le zircon (ZrSiO₄) ou des particules céramiques choisies parmi la cérine (CeO₂) le zirconium (ZrO₂), la cérine stabilisée (Gd₂O₃ entre 3 et 10 mol% en cérine) et le zirconium stabilisé (Y₂O₃ entre 3 et 10 mol% en zirconium) et les oxydes mixtes de formule (I):

Ce₍₁₋ₓ₎ Zrₓ O_{(2-δ)} , (I)

où 0 < x < 1 et δ assure la neutralité électrique de l'oxyde,
ou les oxydes mixtes dopés de formule (II):

Ce_{(1-x-y)} Zrₓ D_{y} O_{2-δ} , (II)

où D is choisi parmi le Magnésium (Mg), l'Yttrium (Y), le Strontium (Sr), le Lanthanum (La), le Presidium (Pr), le Samarium (Sm), le Gadolinium (Gd), l'Erbium (Er) ou l'Ytterbium (Yb); où 0 < x < 1, 0< y <0;5 et δ assure la neutralité électrique de l'oxyde.

L'architecture alvéolaire catalytique lorsqu'elle est de nature métallique comprend typiquement des particules de NiCrAl, NiCrFeAl, NiFeCrAlY, FeCrAl ou FeCrAlY ou un mélange de ces particules. Ces formulations pourront également contenir d'autres éléments dopants (Co, Mn, Si, Ti, Nb, ...).

Enfin, les architectures alvéolaires catalytiques peuvent présentées un gradient de porosité axiale et/ou radiale, continu et/ou discontinu comme décrit dans le document EP2123618, et/ou un gradient de concentration en phase catalytique axiale et/ou radiale, continu et/ou discontinu comme décrit dans le document EP2141139.

Dans l'enceinte réactionnelle, les modules pourront être empilés de manière symétrique ou asymétrique ; autrement dit le nombre de premiers modules d'une architecture alvéolaire catalytique offrant au flux gazeux un chemin privilégié dans la direction axiale du réacteur pourra être inférieure, supérieure ou sensiblement égale au nombre de seconds modules d'une architecture alvéolaire catalytique offrant au flux gazeux un chemin privilégié dans la direction radiale du réacteur. D'autre part, les premiers et seconds modules pourront être empilés dans l'enceinte réactionnelle alternativement ou par série de modules ; une ou plusieurs hauteurs de l'enceinte réactionnelle étant remplies de premiers modules et une ou plusieurs hauteurs de l'enceinte réactionnelle étant remplies de seconds modules.

Un empilement symétrique conduira par exemple à homogénéiser les aspects perte de charge, échange de chaleur... tronçons par tronçons.

Le réacteur catalytique selon l'invention peut-être utilisé pour produire des produits gazeux, en particulier un gaz de synthèse.

Le gaz d'alimentation comprend de préférence de l'oxygène, du dioxyde de carbone ou de la vapeur d'eau mélangé à un (des) hydrocarbure(s) léger(s) (méthane, gaz naturel) ou plus lourds (naphta, GPL). Toutefois ces structures de lits catalytiques peuvent être déployées sur tous les réacteurs catalytiques du procédé de production d'hydrogène par vaporeformage, à savoir notamment les lits de pré reformage, de reformage et de water-gas-shift ou de production de gaz naturel de synthèse (SNG) par la réaction de méthanation.

De manière plus générale ces structures de lits catalytiques peuvent être employées dans tout réacteur chimique induisant une ou des réactions catalytiques hétérogènes (gaz-solide ou liquide-solide principalement) significativement endo ou exo-thermiques.

Les températures de réaction qui sont employées sont élevées et sont comprises entre 200 et 1000°C, de préférence entre 400°C et 1000°C.

La pression des réactifs (CO, H₂, CH₄, H₂O, CO₂, ...) peut être comprise entre 10 et 50 bars, préférentiellement entre 15 et 35 bars.

## Revendications

1. Réacteur catalytique mettant en jeu un flux gazeux comprenant une structure catalytique comprenant:
- au moins un premier module d'une architecture alvéolaire catalytique orienté de telle manière que la majorité des pores de l'architecture alvéolaire catalytique débouche dans la direction sensiblement axiale du réacteur ; et
- au moins un second module d'une architecture alvéolaire catalytique orienté de telle manière que la majorité des pores de l'architecture alvéolaire catalytique débouche dans la direction sensiblement radiale du réacteur ;
le premier et le deuxième module étant juxtaposés au sein du réacteur.

2. Réacteur catalytique mettant en jeu un flux gazeux comprenant une structure catalytique comprenant :
- au moins un premier module d'une architecture alvéolaire catalytique orienté de telle manière que la majorité des pores de l'architecture alvéolaire catalytique débouche dans la direction sensiblement axiale du réacteur ; et
- au moins un second module d'une architecture alvéolaire catalytique présentant une pluralité de canaux au sein de l'architecture alvéolaire catalytique orientés dans la direction sensiblement radiale du réacteur.

3. Réacteur catalytique mettant en jeu un flux gazeux comprenant une structure catalytique comprenant :
- au moins un premier module d'une architecture alvéolaire catalytique présentant une pluralité de canaux au sein de l'architecture alvéolaire catalytique orientés dans la direction sensiblement axiale du réacteur ; et
- au moins un second module d'une architecture alvéolaire catalytique est orienté de telle manière que la majorité des pores de l'architecture alvéolaire catalytique débouche dans la direction sensiblement radiale du réacteur.

4. Réacteur catalytique selon l'une des revendications 1 à 3, **caractérisé en ce que** le premier module et le second module sont confondus en un seul module offrant au flux gazeux un premier chemin privilégié dans la direction sensiblement axiale du réacteur et un deuxième chemin privilégié dans la direction sensiblement radiale du réacteur.

5. Réacteur catalytique selon l'une des revendications 2 ou 3, **caractérisé en ce que** les canaux sont de section circulaire, carré ou hexagonale, ou ont la forme de fentes ou de rainures.

6. Réacteur catalytique selon l'une des revendications 1 à 5, **caractérisé en ce que** les architectures alvéolaires catalytiques sont soit des mousses céramiques, soit des mousses métalliques recouvertes en surface d'une couche catalytique.

7. Utilisation du réacteur catalytique tel que défini dans l'une des revendications 1 à 6 pour produire du gaz.

8. Utilisation selon la revendication 7, **caractérisé en ce que** le gaz est du gaz de synthèse.
